# EUROPÄISCHE PATENTANMELDUNG

(11) **EP 3 706 305 A1**
(43) Veröffentlichungstag der Anmeldung: **09.09.2020**
(21) Anmeldenummer: 19161314.0
(22) Anmeldetag: 07.03.2019
(51) Int. Cl.: H02P 1/16, A47J 27/00, H02H 9/02

(54) **HAUSHALTSGERÄT SOWIE VERFAHREN ZUM BETREIBEN EINES HAUSHALTSGERÄTS**

(71) Anmelder: Vorwerk & Co. Interholding GmbH, 42270 Wuppertal (DE)
(72) Erfinder: Lang, Torsten, 42657 Solingen (DE)
(74) Vertreter: Patentanwälte Bals & Vogel

(57) **Zusammenfassung**

Die Erfindung betrifft ein Haushaltsgerät (1) aufweisend eine bewegbare erste Funktionseinheit (10) zum Bereitstellen einer ersten Gerätefunktion für einen Benutzer, eine elektrische zweite Funktionseinheit (20) zum Bereitstellen einer zweiten Gerätefunktion für den Benutzer, und eine Antriebsvorrichtung (11) zum Antreiben der ersten Funktionseinheit (10) mit einem Elektromotor (12), einem Anschluss (13) zur Energieversorgung des Elektromotors (12) und einer Vorschaltung (30), die zwischen den Anschluss (13) und den Elektromotor (12) geschaltet ist, wobei die Vorschaltung (30) ein Strombegrenzungselement (31) zum Begrenzen eines Stroms (200) aufweist.

Ferner betrifft die Erfindung ein Verfahren (100) zum Betreiben eines Haushaltsgeräts (1).

## Beschreibung

Die Erfindung betrifft ein Haushaltgerät gemäß dem Oberbegriff des unabhängigen Vorrichtungsanspruchs sowie ein Verfahren zum Betreiben eines Haushaltsgerätes.

Elektrisch betriebene Haushaltsgeräte sind aus dem Stand der Technik bekannt. Dabei wird häufig ein Elektromotor eingesetzt, durch den zum Beispiel ein rotierbares oder translatorisch bewegbares Element des Haushaltsgerätes verstellt wird, um eine bestimmte Funktion des Haushaltsgerätes auszuführen. So sind z. B. Küchenmaschinen bekannt, bei denen die Messer zum Zerkleinern oder durch Mischen von Zutaten durch einen Elektromotor rotatorisch angetrieben werden. Um möglichst viele Funktionen in einem einzigen Gerät zu vereinen, weisen derartige Küchenmaschinen häufig weitere Funktionen auf. Insbesondere beim Einschalten des Elektromotors können jedoch hohe Ströme entstehen, die den Motor und/oder weitere elektrische Komponenten beschädigen können.

Um derartige Anlauf- und/oder Einschaltströme zu begrenzen, ist es ferner bekannt, leistungsstarke Widerstände in Reihe zu solchen elektrischen Komponenten zu schalten, die diese Anlauf- und/oder Einschaltströme verursachen können. So werden teilweise NTC Widerstände eingesetzt, die im kalten Zustand einen hohen Widerstand aufweisen, der den Strom beim Einschalten begrenzt und später mit zunehmender Erwärmung einen niedrigeren Widerstand aufweisen. Dabei ist es jedoch von Nachteil, dass bei einer regelmäßigen und/oder schnellen Folge eines Ein- und Ausschaltens des Elektromotors die Zeit zwischen den Schaltvorgängen gegebenenfalls nicht ausreicht, um den Widerstand abzukühlen und somit wieder den Zustand mit hohem Widerstand einzunehmen. Ferner sind derartige zusätzliche Widerstände oft vibrationsanfällig (da sie häufig ein Keramikgehäuse aufweisen) und können in Folge dynamischer Belastungen eine reduzierte Lebensdauer aufweisen. Darüber hinaus verursachen zusätzliche Widerstände Kosten und benötigen Bauraum.

Es ist eine Aufgabe der vorliegenden Erfindung, voranstehend aus dem Stand der Technik bekannte Nachteile zumindest teilweise zu beheben. Insbesondere ist es eine Aufgabe der vorliegenden Erfindung die Begrenzung eines Stromes, insbesondere beim Einschalten einer elektrischen Komponente, bei einem Haushaltsgerät in kostengünstiger Art und Weise zu verbessern.

Die voranstehende Aufgabe wird gelöst durch ein Haushaltsgerät mit den Merkmalen des unabhängigen Vorrichtungsanspruchs sowie ein Verfahren zum Betreiben eines Haushaltgeräts mit den Merkmalen des unabhängigen Verfahrensanspruchs. Weitere Merkmale und Details der Erfindung ergeben sich aus den Unteransprüchen, der Beschreibung und den Zeichnungen. Dabei gelten Merkmale und Details, die in Zusammenhang mit der erfindungsgemäßen Vorrichtung beschrieben worden sind, selbstverständlich auch in Zusammenhang mit dem erfindungsgemäßen Verfahren und jeweils umgekehrt, sodass bzgl. der Offenbarung zu den einzelnen Erfindungsaspekten stets wechselseitig Bezug genommen wird bzw. werden kann.

Erfindungsgemäß weist das Haushaltgerät eine bewegbare erste Funktionseinheit zum Bereitstellen einer ersten Gerätefunktion für einen Benutzer, eine elektrische zweite Funktionseinheit zum Bereitstellen einer zweiten Gerätefunktion für den Benutzer, und eine Antriebsvorrichtung zum Antreiben der ersten Funktionseinheit auf. Die Antriebsvorrichtung weist ferner einen Elektromotor, einen Anschluss zur Energieversorgung des Elektromotors und eine Vorschaltung auf, wobei die Vorschaltung zwischen den Anschluss und den Elektromotor geschaltet ist. Weiterhin weist die Vorschaltung ein Strombegrenzungselement zum Begrenzen eines Stroms (beim Einschalten oder Anlaufen der Antriebsvorrichtung; gemeint ist: während der Zeitspanne) auf. Dabei ist das Strombegrenzungselement durch die zweite Funktionseinheit gebildet. Die Vorschaltung kann insbesondere auch als Vorschalteinheit bezeichnet werden.

Unter dem Begrenzen des Stroms kann insbesondere ein Begrenzen einer Stromspitze, eines Einschaltstroms und/oder eines Anlaufstroms verstanden werden. Vorzugsweise kann beim Begrenzen des Stroms ein Stromparameter insbesondere auf einen unschädlichen Wert reduziert werden. Dabei kann das Strombegrenzungselement derart zum Elektromotor geschaltet sein, dass das Strombegrenzungselement einen Anlaufwiderstand für den Elektromotor bildet. Insbesondere ist das Strombegrenzungselement in Reihe zum Elektromotor und/oder zum Anschluss geschaltet. Vorzugsweise kann die Vorschaltung dazu ausgebildet sein, den Strom temporär zu begrenzen, z. B. indem das Strombegrenzungselement aktivierbar und/oder deaktivierbar ist. Unter dem Anschluss kann insbesondere ein elektrischer Anschluss zum Anschluss an ein Stromnetz und/oder an einen Energiespeicher, wie z. B. eine Batterie, verstanden werden. Dabei kann der Anschluss auch permanent mit dem Stromnetz und/oder dem Energiespeicher während des Betriebs des Haushaltsgerätes verbunden sein. Unter der ersten und/oder der zweiten Gerätefunktion kann insbesondere ein Hauptnutzen des Haushaltgerätes verstanden werden. Insbesondere wird durch die erste Funktion ein erster Nutzen (bspw. Rühren und/oder Häckseln) für den Benutzer durch das Haushaltgerät bereitgestellt und durch die zweite Gerätefunktion ein zweiter Nutzen (bspw. Erwärmen und/oder Kochen). Die erste und zweite Gerätefunktion können voneinander unabhängige Gerätefunktionen sein. Die gesamte zweite Funktionseinheit kann das Strombegrenzungselement bilden oder ein Teil der zweiten Funktionseinheit kann das Strombegrenzungselement bilden.

Dadurch, dass das Strombegrenzungselement durch die zweite Funktionseinheit gebildet ist, kann ein zusätzlicher Nutzen der zweiten Funktionseinheit generiert werden, indem diese zum einen zum Bereitstellen der zweiten Gerätefunktion dient und zum anderen als Strombegrenzungselement. Dabei kann vorgesehen sein, dass die zweite Funktionseinheit nur temporär das Strombegrenzungselement bildet und elektrisch von der Vorschaltung getrennt wird, wenn ein Begrenzen des Stroms, z. B. nach dem Einschalten, nicht mehr notwendig ist. Insbesondere kann ein zusätzlicher Vorwiderstand, insbesondere in Form eines zusätzlichen Bauteils, entfallen, sodass diesbezügliche Kosten sowie Bauraum eingespart werden können. Insbesondere ist das Haushaltsgerät dadurch ferner robust ausgebildet, denn durch Einsparung eines zusätzlichen Widerstandsbauteils entfällt auch eine weitere Schwachstelle, die z. B. bei Auftreten von Vibrationen (bspw. Bruch der Keramik vom Widerstand) beschädigt werden könnte.

Vorzugsweise kann die zweite Funktionseinheit ferner einen Messsensor zum Messen eines Stromparameters aufweisen. Der Messsensor kann dabei derart mit dem Strombegrenzungselement verbunden sein, dass durch den Messsensor der Strom der Vorschaltung am Strombegrenzungselement und/oder eine Bestromung im Betrieb der zweiten Funktionseinheit messbar ist. Durch eine Messung des Stroms der Vorschaltung kann z. B. eine maximale Kapazität einer Kapazität der Antriebsvorrichtung ermittelt werden, und damit insbesondere deren Funktionsfähigkeit und/oder Ladezustand überprüft werden. Insbesondere kann somit auf einen ohnehin an der zweiten Funktionseinheit vorhandenen Sensor zurückgegriffen werden. Insbesondere können weitere Überwachungsfunktionen der zweiten Funktionseinheit auch auf das Strombegrenzungselement und/oder die Antriebsvorrichtung übertragbar sein bzw. doppelt nutzbar sein. Der Stromparameter kann insbesondere eine elektrische Spannung und/oder eine Stromstärke umfassen. Anhand des ermittelten Ladezustand der Kapazität kann auch der Umschaltzeitpunkt von einem Schutzschaltzustand I (beim Einschalten oder Anlaufen) auf einen Betriebsschaltzustand II (normaler Betrieb der ersten Funktionseinheit nach dem Einschalten oder Anlaufen) (siehe Definitionen der Zustände I/II weiter unten) ermittelt werden.

Weiterhin ist es im Rahmen der Erfindung denkbar, dass die Antriebsvorrichtung eine über den Anschluss aufladbare Kapazität umfasst, wobei das Strombegrenzungselement zum Begrenzen des Stroms beim Aufladen der Kapazität ausgebildet ist, insbesondere wobei es sich bei der Kapazität um einen Zwischenkreiskondensator handelt. Insbesondere kann das Strombegrenzungselement als Vorladewiderstand ausgebildet sein. Vorzugsweise kann die Kapazität ferner einen Folienkondensator und/oder Elektrolytkondensator aufweisen. Wenn es sich bei der Kapazität um zumindest einen Zwischenkreiskondensator handelt, kann ferner die Antriebsvorrichtung einen Gleichrichter aufweisen, über den der Elektromotor bestrombar und/oder ansteuerbar ist. Die Kapazität kann eine elektrische Komponente darstellen, welche einen hohen Ladestrom zumindest temporär aufweist. So kann sich insbesondere eine Kapazität in Form eines Zwischenkreiskondensators wie ein Kurzschluss verhalten, wenn diese völlig entladen ist. Insbesondere wenn es sich bei der ersten bewegbaren Funktionseinheit um einen sicherheitsrelevante Funktionseinheit handelt, kann es jedoch wünschenswert sein, die aufladbare Kapazität vollständig zu entladen, wenn der Motor gestoppt wird. Insbesondere in Verbindung mit einer vollständigen Entkopplung von einer Energiequelle kann dadurch sichergestellt werden, dass der Motor nicht auf Grund einer Fehlfunktion auslöst und somit die sicherheitsrelevante Funktion ausgeführt wird, wenn ein Benutzer dies nicht erwartet. Dies kann beispielsweise bei einem Küchengerät der Fall sein, welches ein Rührwerk und/oder einen Mixer aufweist und dessen Elektromotor eine aufladbare Kapazität benötigt. Durch die Ausgestaltung des Kondensators als Folienkondensator und/oder Elektrolytkondensator kann die Robustheit der Vorrichtung weiter gesteigert sein. So sind derartige Kondensatoren z. B. über einen weiten Temperaturbereich temperaturfest und weisen eine hohe Zuverlässigkeit auf.

Weiterhin kann bei einem erfindungsgemäßen Haushaltgerät vorgesehen sein, dass die zweite Funktionseinheit eine elektrische Widerstandsheizung umfasst, wobei das Strombegrenzungselement durch zumindest einen Bereich eines Widerstandselements zum Erwärmen der Widerstandsheizung gebildet ist. Das Widerstandselement kann z. B. einen Draht und/oder eine Leiterbahn umfassen, und sich bei Bestromung erwärmen. Das Widerstandselement kann zumindest bereichsweise in die Vorschaltung einbindbar sein, indem dieses z. B. mit der Vorschaltung verschaltet ist oder verschaltbar ist. Die elektrische Widerstandsheizung kann z. B. in einem Küchengerät zum Erwärmen von Speisen dienen oder in dem Haushaltsgerät eine andere Temperaturfunktion ausführen. Insbesondere kann das Erwärmen der Widerstandsheizung durch das Widerstandselement die zweite Gerätefunktion darstellen. Das Widerstandselement kann dabei bereichsweise oder vollständig das Strombegrenzungselement bilden. Insbesondere können mehrere, miteinander verschaltete Widerstandselemente bereichsweise oder vollständig das Strombegrenzungselement bilden. Durch die elektrische Widerstandsheizung können somit die Voraussetzungen vorliegen, die zweite Funktionseinheit, insbesondere ohne signifikante konstruktive Veränderung der zweiten Funktionseinheit, als Strombegrenzungselement in die Vorschaltung einzubinden. Gleichzeitig stellt die elektrische Widerstandsheizung ein robustes Element dar, welches in kostengünstiger und einfacher Art und Weise als Strombegrenzungselement genutzt werden kann.

Vorzugsweise kann bei einem erfindungsgemäßen Haushaltsgerät die Vorschaltung eine Umschalteinheit umfassen, durch welche die Vorschaltung zumindest zwischen einem Schutzschaltzustand I, in welchem ein Strom durch das Strombegrenzungselement begrenzbar ist (beim Einschalten oder Anlaufen), und einem (zeitlich folgenden) Betriebsschaltzustand II, in welchem das Strombegrenzungselement deaktiviert ist (im normalen Betrieb), umschaltbar ist. Darunter, dass das Strombegrenzungselement im Betriebsschaltzustand deaktiviert ist, kann insbesondere verstanden werden, dass das Strombegrenzungselement überbrückt und/oder vom Anschluss und/oder vom Elektromotor elektrisch getrennt ist. Somit kann das Strombegrenzungselement deaktiviert werden, wenn eine Stromspitze abgeklungen ist oder die Gefahr eines Auftretens einer Stromspitze oder eines hohen Stroms nicht mehr besteht. Dadurch wird Energie, die am Anschluss bereitgestellt wird, dem Motor zur Verfügung gestellt und wird nicht dem Strombegrenzungselement zugeführt. Somit kann ein energieeffizienter Betrieb des Haushaltsgerätes gewährleistet werden und die erste und zweite Funktionseinheit können elektrisch voneinander entkoppelt werden, wenn eine Strombegrenzung nicht mehr gewünscht wird.

Weiterhin kann bei einem erfindungsgemäßen Haushaltsgerät vorgesehen sein, dass die Umschalteinheit zum Umschalten zwischen dem Schutzschaltzustand und dem Betriebsschaltzustand zumindest ein erstes Schaltelement, das zum Strombegrenzungselement parallelgeschaltet ist, und ein zweites Schaltelement, das zum Strombegrenzungselement in Reihe geschaltet ist, umfasst. Durch das erste Schaltelement, das zum Strombegrenzungselement parallelgeschaltet ist, kann ein Strompfad gebildet sein, durch welchen das Strombegrenzungselement überbrückbar ist. Durch das zweite Schaltelement, das zum Strombegrenzungselement in Reihe geschaltet ist, kann das Strombegrenzungselement vom Anschluss und/oder von dem Elektromotor elektrisch getrennt werden. Dadurch fließt beim Öffnen des zweiten Schaltelementes kein Strom durch das Strombegrenzungselement und eine elektrische Entkopplung der ersten und zweiten Funktionseinheit kann realisiert werden. Das erste und/oder zweite Schaltelement kann Software- und/oder Hardware-gestützt schaltbar sein. Somit kann durch die Umschalteinheit eine robuste Möglichkeit geschaffen sein zwischen dem Schutzschaltzustand und dem Betriebsschaltzustand umzuschalten und das Strombegrenzungselement in zuverlässiger Art und Weise elektrisch zu trennen. Ferner kann beim Öffnen des ersten und zweiten Schaltelementes eine vollständige elektrische Trennung des Motors und/oder Kondensators von einer Energiequelle realisiert sein. Vorzugsweise kann die Umschalteinheit ein drittes Schaltelement aufweisen, durch welches der Sicherheitszustand erreicht werden kann, wenn das erste, zweite und dritte Schaltelement geöffnet sind. Dadurch kann eine vollständige Trennung des Elektromotors und/oder des Kondensators vom Anschluss und/oder vom Strombegrenzungselement erreicht werden. Insbesondere kann das dritte Schaltelement derart in der Vorschaltung angeordnet sein, dass durch Öffnen des dritten und des ersten und/oder zweiten Schaltelementes zwei unterschiedliche Potentiale vom Elektromotor und/oder Kondensator getrennt werden. Durch die Möglichkeit der elektrischen Trennung des Anschlusses kann die Sicherheit und Zuverlässigkeit des Haushaltsgerätes verbessert sein.

Im Rahmen der Erfindung kann ferner vorgesehen sein, dass die Umschalteinheit zum Umschalten zwischen dem Schutzschaltzustand und dem Betriebsschaltzustand zumindest ein Relais und/oder zumindest einen Transistor, insbesondere in Form eines MOSFETs, aufweist. Vorzugsweise kann das erste und/oder zweite Schaltelement als Relais und/oder Transistor, insbesondere in Form eines MOSFETs, ausgestaltet sein. Dabei handelt es sich um kostengünstige, robuste Bauteile. Unter einem MOSFET kann insbesondere ein Metall-Oxyd-Halbleiter-Feldeffekttransistor verstanden werden durch welchen in zuverlässiger Art und Weise kurze Schaltzeiten und hohe Schaltzahlen erzielt werden können. Dadurch kann somit ein zuverlässiger Betrieb des Haushaltsgerätes gewährleistet sein. Durch die elektromagnetische Verstellmöglichkeit des Relais ist dieses ferner in einfacher Art und Weise ansteuerbar und zuverlässig. Insbesondere kann durch den Einsatz eines Relais die Komplexität einer Steuerung deutlich reduziert sein. Auch das dritte Schaltelement kann als Relais als Relais und/oder Transistor, insbesondere in Form eines MOSFETs, ausgestaltet sein.

Weiterhin kann bei einem erfindungsgemäßen Haushaltsgerät vorgesehen sein, dass zwischen die Vorschaltung und den Elektromotor eine Motorsteuereinheit zum Ansteuern des Elektromotors geschaltet ist, insbesondere wobei es sich bei dem Elektromotor um einen umrichterbetriebenen Motor handelt. Insbesondere kann durch einen umrichterbetriebenen Motor eine zuverlässige, robuste Ausgestaltung erzielt werden. Durch die Motorsteuereinheit kann insbesondere eine hohe Leistung des Motors abgerufen werden. Weiterhin kann durch die Motorsteuereinheit ein Elektromotor eingesetzt werden, der wartungsarm oder wartungsfrei ist. Vorzugsweise kann es sich bei dem Elektromotor um einen bürstenlosen Motor, insbesondere eine Reluktanzmotor, handeln. Dadurch kann die Robustheit des Haushaltsgerätes weiter gesteigert sein. Durch die Vorschaltung können ferner empfindliche elektrische Bauteile der Motorsteuereinheit vor hohen Strömen geschützt werden, die insbesondere auch dann auftreten können, wenn der umrichterbetriebene Motor in einem hohen Leistungsbereich angesteuert werden soll. Um den umrichterbetriebenen Motor anzusteuern, kann die Motorsteuerung vorzugsweise einen oder mehrere Stromrichter aufweisen. Ferner kann die Motorsteuerung dazu ausgebildet sein drei oder mehr Phasen des Elektromotors anzusteuern. Somit kann die Motorsteuerung ein elektronisches Bauteil darstellen, welches durch einen hohen Strom beschädigt werden könnte, so dass die robuste Realisierung des Strombegrenzungselementes durch die zweite Funktionseinheit die Motorsteuereinheit schützen kann.

Weiterhin kann bei einem erfindungsgemäßen Haushaltsgerät vorgesehen sein, dass es sich bei dem Haushaltsgerät um ein Küchengerät zum Zubereiten von Speisen handelt, insbesondere wobei die erste Funktionseinheit ein Rührwerk aufweist und/oder wobei die zweite Funktionseinheit in einem von der Antriebsvorrichtung lösbaren Kochgefäß angeordnet ist. In dem Küchengerät kann z. B. eine elektrische Widerstandsheizung vorgesehen sein, die die zweite Funktionseinheit bildet und zum Erwärmen von Speisen vorgesehen ist. Das Rührwerk kann zum Umrühren und/oder Zerkleinern von Zutaten ausgebildet sein. Insbesondere kann das Rührwerk ein Rührmittel, insbesondere in Form eines rotierbaren Messer, aufweisen. Somit können diverse Arbeitsschritte beim Zubereiten von Speisen durch das Haushaltsgerät durchgeführt werden, wobei die zweite Funktionseinheit effizient genutzt werden kann, wenn diese gleichzeitig das Strombegrenzungselement bildet. Ist die zweite Funktionseinheit lösbar von der Antriebsvorrichtung in einem Kochgefäß angeordnet, kann dieses in einfacher Art und Weise durch den Benutzer gereinigt werden und insbesondere im mit der Antriebsvorrichtung verbundenen Zustand das Strombegrenzungselement bilden.

Ferner kann bei einem erfindungsgemäßen Haushaltsgerät vorgesehen sein, dass die zweite Funktionseinheit mit der Antriebsvorrichtung, insbesondere mit der Vorschaltung, durch eine elektrische Kontaktierung, vorzugsweise in Form einer Steckverbindung, verbunden ist, wodurch die zweite Funktionseinheit von der Antriebsvorrichtung, d.h. insbesondere aus der Antriebsvorrichtung, lösbar ist. Durch die Steckverbindung kann in einfacher Art und Weise eine Möglichkeit geschaffen sein die zweite Funktionseinheit zum einen elektrisch von der Antriebsvorrichtung und vom elektrischen Anschluss zu entkoppeln und zum anderen die zweite Funktionseinheit unabhängig von der Antriebsvorrichtung zu nutzen. Dadurch kann die zweite Funktionseinheit z. B. in einem Kochgefäß angeordnet sein, das in einer Spülmaschine gereinigt werden kann. Somit kann ein Komfort des Haushaltsgeräts erhöht werden, ohne dass das Haushaltsgerät für den täglichen Einsatz weniger robust wird. Die Steckverbindung kann insbesondere einen Stecker und eine Buchse aufweisen, insbesondere wobei der Stecker an der zweiten Funktionseinheit und die Buchse an der Antriebsvorrichtung angeordnet sein kann oder umgekehrt. Zusätzlich oder alternativ kann die elektrische Kontaktierung zwei offenliegende elektrische Kontakte aufweisen, welche bei gegenseitiger Kontaktierung eine elektrische Verbindung bereitstellen.

Gemäß einem weiteren Aspekt der vorliegenden Erfindung ist ein Verfahren zum Betreiben eines Haushaltsgerätes, insbesondere eines erfindungsgemäßen Haushaltsgerätes, beansprucht. Das Haushaltsgerät weist dabei eine bewegbare erste Funktionseinheit zum Bereitstellen einer ersten Gerätefunktion für einen Benutzer auf. Das Verfahren umfasst zumindest folgenden Schritt:
- Betreiben einer Antriebsvorrichtung zum Antreiben der ersten Funktionseinheit des Haushaltsgerätes durch einen elektrischen Strom, wobei ein Begrenzen des Stroms (insbesondere beim Einschalten oder Anlaufen der Antriebsvorrichtung) durch eine zweite Funktionseinheit des Haushaltsgerätes, die zum Bereitstellen einer zweiten Gerätefunktion für den Benutzer ausgebildet ist, erfolgt.

Damit bringt ein erfindungsgemäßes Verfahren die gleichen Vorteile mit sich, wie sie ausführlich mit Bezug auf ein erfindungsgemäßes Haushaltsgerät beschrieben worden sind.

Insbesondere kann das Betreiben der Antriebsvorrichtung (ausschließlich) während eines Einschaltens oder Anlaufens (a) des Haushaltsgerätes und/oder (b) eines Elektromotors der Antriebsvorrichtung und/oder während eines Aufladens (c) eines Kondensators, der dem Elektromotor vorgeschaltet ist, durchgeführt werden. Das Betreiben der Antriebsvorrichtung kann somit insbesondere ein Starten und/oder Antreibens des Elektromotors umfassen.

Vorzugsweise kann ein Messen eines Stromparameters des Stroms durch die zweite Funktionseinheit, insbesondere einen Messsensor der zweiten Funktionseinheit erfolgen. Insbesondere kann dabei der Strom an der Antriebsvorrichtung, insbesondere einer Vorschaltung der Antriebsvorrichtung, und/oder eine Bestromung im Betrieb der zweiten Funktionseinheit gemessen werden. Anhand der Messung des Stroms der Vorschaltung kann vorgesehen sein, dass z. B. eine maximale Kapazität einer Kapazität der Antriebsvorrichtung ermittelt wird, und damit insbesondere deren Funktionsfähigkeit überprüft wird. Insbesondere kann somit auf einen ohnehin an der zweiten Funktionseinheit vorhandenen Sensor zurückgegriffen werden. Insbesondere können weitere Überwachungsfunktionen der zweiten Funktionseinheit auch auf das Strombegrenzungselement und/oder die Antriebsvorrichtung übertragbar sein bzw. doppelt nutzbar sein.

Weiterhin kann bei einem erfindungsgemäßen Verfahren vorgesehen sein, dass zumindest beim Betreiben der Antriebsvorrichtung eine Kapazität des Haushaltgerätes geladen wird, wobei beim Begrenzen des Stroms ein Ladestrom der Kapazität begrenzt wird. Insbesondere kann es sich somit bei dem Strom, welcher begrenzt wird, um den Ladestrom handeln. Die Kapazität kann dazu eingesetzt werden, einen Strom für einen Elektromotor zu puffern. Kritisch kann dabei ein Aufladen der Kapazität sein, wenn die Kapazität vollständig entladen ist. Dies kann bspw. der Fall sein, nachdem ein Umschalten in den Sicherheitszustand durchgeführt wurde. Zwar ist im Sicherheitszustand die Sicherheit der ersten Funktionseinheit gewährleistet, jedoch entsteht bei erneutem Aufladen der Kapazität ggf. ein hoher Strom. Dieser kann durch die zweite Funktionseinheit begrenzt werden.

Weiterhin kann bei einem erfindungsgemäßen Verfahren vorgesehen sein, dass das Begrenzen des Stroms in einem Schutzschaltzustand der Antriebsvorrichtung, insbesondere einer Vorschaltung der Antriebsvorrichtung, erfolgt, und das Verfahren zumindest einen der folgenden Schritte umfasst:
- Umschalten in einen Betriebsschaltzustand der Antriebsvorrichtung, insbesondere der Vorschaltung, in welchem das Begrenzen des Stroms durch die zweite Funktionseinheit deaktiviert ist, und/oder
- Umschalten in einem Sicherheitszustand der Antriebsvorrichtung, insbesondere der Vorschaltung, in welchem ein Elektromotor der Antriebsvorrichtung von einem Anschluss der Antriebsvorrichtung elektrisch getrennt ist.

Durch das Umschalten in den Betriebsschaltzustand fließt insbesondere kein Strom des Elektromotors über das Strombegrenzungselement bzw. über die zweite Funktionseinheit. Dadurch können die erste und zweite Funktionseinheit im Betriebsschaltzustand elektrisch getrennt sein und unabhängig voneinander betrieben werden. Insbesondere erfolgt im Betriebsschaltzustand ein Antreiben der ersten Funktionseinheit durch den Elektromotor. Durch die Deaktivierung des Strombegrenzungselementes ist somit auch der Widerstand vom Anschluss zum Elektromotor reduziert, sodass im normalen Betrieb des Elektromotors die Verluste reduziert sein können. Beim Umschalten der Vorschaltung in den Sicherheitszustand wird vorzugsweise der Elektromotor vollständig vom Anschluss elektrisch getrennt. Vorzugsweise wird dies durch Öffnen eines oder mehrerer Schaltelemente, insbesondere einer Umschalteinheit der Vorschaltung, durchgeführt. Ferner kann im Sicherheitszustand ein Entladen einer Kapazität der Antriebsvorrichtung, vorzugsweise über den Elektromotor, erfolgen. Somit kann der Elektromotor im Sicherheitszustand über die Motorsteuerung derart bestromt werden, dass sich ein Rotor des Elektromotors nicht dreht. So können beispielsweise die Phasen des Elektromotors entsprechend angesteuert werden, sodass sich der Rotor nicht bewegt, eine im Kondensator noch vorhandene Spannung jedoch abgebaut wird. Dadurch kann im Sicherheitszustand ein unbeabsichtigtes Einschalten des Elektromotors vermieden werden. Im Betriebsschaltzustand kann insbesondere ein Normalbetrieb der ersten und/oder zweiten Funktionseinheit ermöglicht sein und/oder ausgeführt werden.

Vorzugsweise kann bei einem erfindungsgemäßen Verfahren vorgesehen sein, dass beim Umschalten in den Betriebsschaltzustand die zweite Funktionseinheit zumindest teilweise überbrückt und/oder vom Anschluss und/oder vom Elektromotor elektrisch getrennt wird.

Dadurch kann der Elektromotor ohne Zwischenschaltung des Strombegrenzungselementes betrieben werden. Somit kann ein Energieverbrauch reduziert werden und die erste Funktionseinheit von der zweiten Funktionseinheit entkoppelt sein, wenn ein Betriebsschaltzustand erreicht ist, in welchem ein Anlaufstrom nicht zu erwarten ist.

Vorzugsweise kann bei einem erfindungsgemäßen Verfahren vorgesehen sein, dass beim Umschalten der Vorschaltung in den Betriebsschaltzustand folgende Schritte ausgeführt werden:
- Schließen eines ersten Schaltelementes einer Umschalteinheit der Antriebsvorrichtung, welches zur zweiten Funktionseinheit zumindest teilweise parallel geschaltet ist,
- Öffnen eines zweiten Schaltelementes der Umschalteinheit, welches zur zweiten Funktionseinheit zumindest teilweise in Reihe geschaltet ist.

Somit kann eine einfache Schaltfolge der Betriebsschaltzustand erreicht werden und die zweite Funktionseinheit vom Anschluss bzw. vom Elektromotor elektrisch getrennt werden. Darunter, dass das erste Schaltelement zumindest teilweise zur zweiten Funktionseinheit parallel geschaltet ist, kann verstanden werden, dass das erste Schaltelement zumindest zum Strombegrenzungselement, welches durch die zweite Funktionseinheit gebildet ist, parallel geschaltet oder parallel schaltbar ist. Darunter, dass das zweite Schaltelement zur zweiten Funktionseinheit zumindest teilweise in Reihe geschaltet ist, kann verstanden werden, dass das zweite Schaltelement zumindest zum Strombegrenzungselement, welches durch die zweite Funktionseinheit gebildet ist, in Reihe geschaltet oder in Reihe schaltbar ist. Bei dem ersten und/oder zweiten Schaltelement kann es sich vorzugsweise um ein Relais, einen Transistor, insbesondere in Form eines MOSFETs, oder ein anderes Schaltelement handeln. Vorzugsweise kann die Umschalteinheit ein drittes Schaltelement aufweisen, durch welches bei Öffnen des dritten Schaltelementes der Sicherheitszustand erreicht werden kann, insbesondere wenn auch das erste, zweite und dritte Schaltelement geöffnet werden. Dadurch kann eine vollständige Trennung des Elektromotors und/oder des Kondensators vom Anschluss und/oder vom Strombegrenzungselement erreicht werden.

Im Rahmen der Erfindung kann ferner vorgesehen sein, dass die zweite Funktionseinheit eine elektrische Widerstandsheizung aufweist, die beim Begrenzen des Stroms zumindest bereichsweise bestromt wird. Insbesondere kann durch ein Widerstandselement der Widerstandsheizung zum Erwärmen der Widerstandsheizung ein Strombegrenzungselement gebildet sein, welches beim Begrenzen des Stroms durch die zweite Funktionseinheit zumindest bereichsweise bestromt wird. Die Widerstandsheizung kann somit ein ohnehin vorhandenes Bauteil des Haushaltsgerätes sein, welches sich vorteilhafterweise zum Begrenzen des Stroms eignet und gleichzeitig seine Hauptfunktion, der Gewährleistung der Heizfunktion, beibehält. Zum elektrischen Koppeln und Entkoppeln der ersten und zweiten Funktionseinheit kann ferner auch die Vorschaltung in besonders einfacher Art und Weise ausgestaltet sein, wenn die zweite Funktionseinheit ohnehin zum Erzeugen von Wärme mittels eines elektrischen Widerstands ausgebildet ist.

Weitere, die Erfindung verbessernde Maßnahme ergeben sich aus der nachfolgenden Beschreibung zu einigen Ausführungsbeispielen der Erfindung, welche in den Figuren schematisch dargestellt sind. Sämtliche aus den Ansprüchen, der Beschreibung und den Zeichnungen hervorgehenden Merkmale und/oder Vorteile, einschließlich konstruktiver Einzelheiten, räumliche Anordnungen und Verfahrensschritte, können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken. Es zeigen schematisch:
- Figuren 1-3:: Schaltzustände eines erfindungsgemäßen Haushaltsgerätes in schematischer Darstellung eines ersten Ausführungsbeispiels,
- Figur 4:: eine schematische Darstellung von Verfahrensschritten bei einem erfindungsgemäßen Verfahren zum Betreiben des Haushaltsgerätes des ersten Ausführungsbeispiels,
- Figur 5:: ein exemplarischer Stromverlauf beim Laden eines Kondensators in schematischer Darstellung,
- Figur 6:: ein erfindungsgemäßes Haushaltsgerät in Form eines Küchengerätes gemäß einem weiteren Ausführungsbeispiel,
- Figur 7:: eine zweite Funktionseinheit des Küchengerätes in schematischer Darstellung.

In den nachfolgenden Figuren werden für die gleichen technischen Merkmale auch von unterschiedlichen Ausführungsbeispielen die identischen Bezugszeichen verwendet.

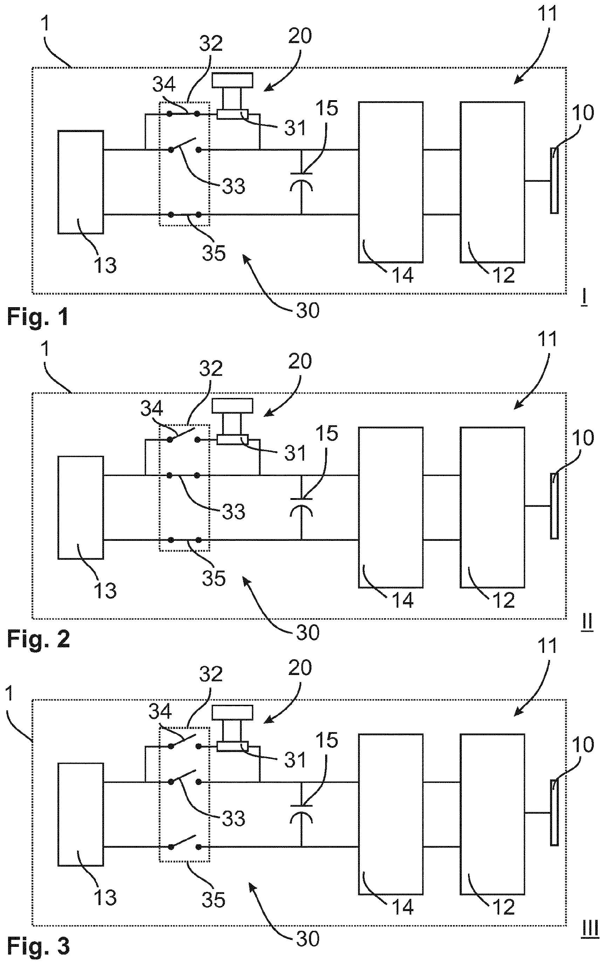

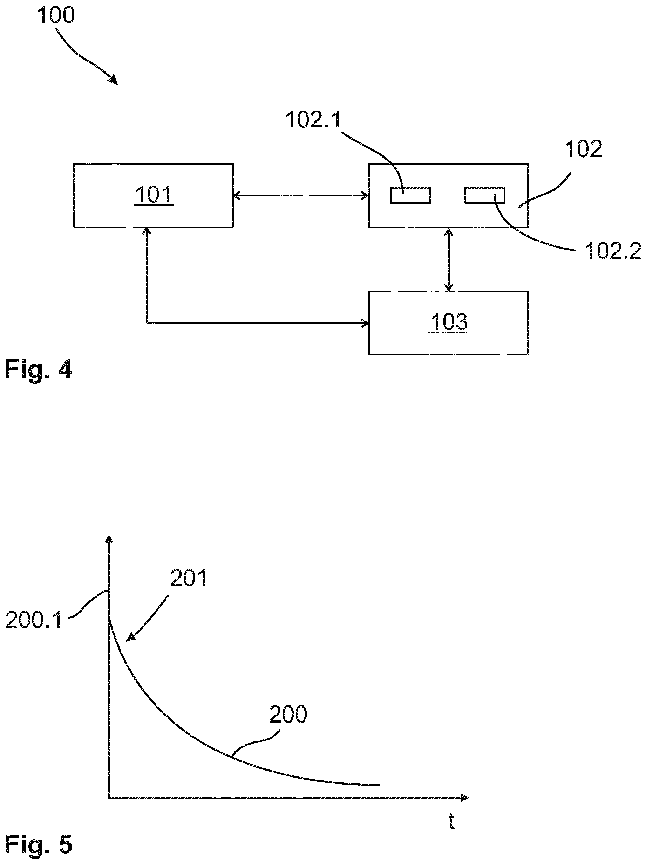

Figur 1 zeigt ein Haushaltsgerät 1 mit einer ersten Funktionseinheit 10 zum Bereitstellen einer ersten Gerätefunktion für einen Benutzer, wobei die erste Funktionseinheit 10 bewegbar ist. Das Haushaltsgerät 1 ist insbesondere durch ein Verfahren 100, wie in Figur 4 in schematischer Darstellung von Verfahrensschritten dargestellt, betreibbar. Ferner weist das Haushaltsgerät 1 eine elektrische zweite Funktionseinheit 20 zum Bereitstellen einer zweiten Gerätefunktion für den Benutzer auf. Die erste Funktionseinheit 10 ist weiterhin durch eine Antriebsvorrichtung 11 antreibbar, die einen Elektromotor 12 aufweist und einen Anschluss 13 zur Energieversorgung des Elektromotors 12. Zwischen dem Anschluss 13 und dem Elektromotor 12 ist ferner eine Vorschaltung 30 geschaltet, die einen Strombegrenzungselement 31 zum Begrenzen eines Stroms 200 aufweist. Weiterhin weist die Antriebsvorrichtung 11 eine Motorsteuerung 14 und eine Kapazität 15 auf, um den Elektromotor 12 ansteuern zu können. Die Kapazität 15 kann vorzugsweise als Folienkondensator und/oder Zwischenkreiskondensator ausgebildet sein. Dabei sind jedoch noch weitere Ausgestaltungen der Kapazität 15 denkbar. Insbesondere handelt es sich bei dem Elektromotor 12 um einen Umrichter betriebenen Elektromotor, vorzugsweise einen Reluktanzmotor. Um den Elektromotor 12 effizient betreiben zu können, sind die Motorsteuerung 14 und die Kapazität 15 zwischen den Anschluss 13 und den Elektromotor 12 geschaltet. Durch die Kapazität 15 kann ein Strom 200 vom Anschluss 13 für den Elektromotor 12 gepuffert werden, wobei die Motorsteuerung 14 vorzugsweise einen oder mehrere Stromrichter aufweist. Insbesondere kann ein Gleichrichter vorgesehen sein, wenn die Kapazität 15 als Zwischenkreiskondensator ausgebildet ist. Ist die Kapazität 15 vollständig entladen, könnte beim Wiederaufladen der Kapazität 15 ein Ladestrom erzeugt werden, der einen Verlauf hat, wie exemplarisch in Figur 5 dargestellt. Insbesondere können derartige oder ähnliche Anlaufströme auch durch den Elektromotor 12 beim Anlaufen hervorgerufen werden.

Figur 5 zeigt einen Verlauf eines Stromparameters 200.2 eines Stroms 200, insbesondere einer Stromstärke, gegenüber der Zeit t, der zu Beginn des Einschaltens zumindest eine Stromspitze 201 aufweist. Zumindest die Stromspitze 201 des Stroms 200 kann durch die Vorschaltung 30 bzw. durch das Strombegrenzungselement 31 begrenzt werden, z. B. indem die Stromspitze 201 reduziert oder eliminiert wird. Dadurch kann ein unschädlicher Wert des Stromparameters 200.2 während eines Einschaltvorgangs des Haushaltsgerätes 1 gewährleistet sein.

Bei dem erfindungsgemäßen Haushaltsgerät 1 ist vorgesehen, dass das Strombegrenzungselement 31 durch die zweite Funktionseinheit 20 des Haushaltsgerätes 1 gebildet ist. Dabei kann zumindest ein Bereich der zweiten Funktionseinheit 20, der gleichzeitig zum Ausführen der zweiten Gerätefunktion dient, auch als Strombegrenzungselement 31 genutzt werden. Ferner ist der Bereich mit der Vorschaltung 30 lösbar oder unlösbar elektrisch verbunden. Gemäß Figur 1 ist ein Schutzschaltzustand I dargestellt, in welchem eine Umschalteinheit 32 der Vorschaltung 30 derart geschaltet ist, dass der Strom 200 vom Anschluss 13 zur Kapazität 15 und/oder zum Elektromotor 12 über das Strombegrenzungselement 31 und damit über die zweite Funktionseinheit 20 fließt. Dazu ist ein erstes Schaltelement 33, das zum Strombegrenzungselement 31 parallel geschaltet ist, geöffnet und ein zweites und ein drittes Schaltelement 34, 35 der Umschalteinheit 32 sind geschlossen. Das zweite Schaltelement 34 ist in Reihe zum Strombegrenzungselement 31 geschaltet. Das dritte Schaltelement 35 dient vorzugsweise dazu ein weiteres Potential des Anschlusses 13 mit der Kapazität 15 und/oder dem Elektromotor 12 zu verbinden. Insbesondere im Schutzschaltzustand I kann ein Betreiben 101 der Antriebsvorrichtung 11, insbesondere des Elektromotors 12, durch den elektrischen Strom 200 vorgesehen sein, wobei ein Begrenzen des Stroms 200 durch die zweite Funktionseinheit 20 erfolgt.

Ferner kann ein Umschalten 102 der Antriebsvorrichtung 11, insbesondere der Vorschaltung 30, in einen Betriebsschaltzustand II vorgesehen sein, in welchem das Strombegrenzungselement 31 deaktiviert ist. Dazu kann ein Schließen 102.1 des ersten Schaltelementes 33 der Umschalteinheit 32 und ein Öffnen 102.2 des zweiten Schaltelementes 34 vorgesehen sein. Dadurch wird das Strombegrenzungselement 31 überbrückt und elektrisch vom Anschluss 13 und/oder vom Elektromotor 12 getrennt, wie in Figur 2 dargestellt. Dadurch kann die Kapazität 15 und der Elektromotor 12 unabhängig von dem Strombegrenzungselement 31 und der zweiten Funktionseinheit 20 betrieben werden, sodass ein Energieverbrauch nicht durch die zusätzliche Strombegrenzung beeinflusst wird.

Soll der Elektromotor 12 und/oder das Haushaltsgerät 1 sicher abgeschaltet werden, kann vorzugsweise ein Umschalten 103 in einen Sicherheitszustand III erfolgen, wie in Figur 3 dargestellt. Dabei werden das erste, zweite und dritte Schaltelement 33, 34, 35 geöffnet, um eine vollständige elektrische Trennung zu erzielen. Insbesondere kann dabei ein Entladen der Kapazität 15 vorgesehen sein, indem der Elektromotor 12 durch die Motorsteuerung 14 derart durch die Kapazität 15 bestromt wird, dass sich ein Rotor des Elektromotors 12 nicht dreht.

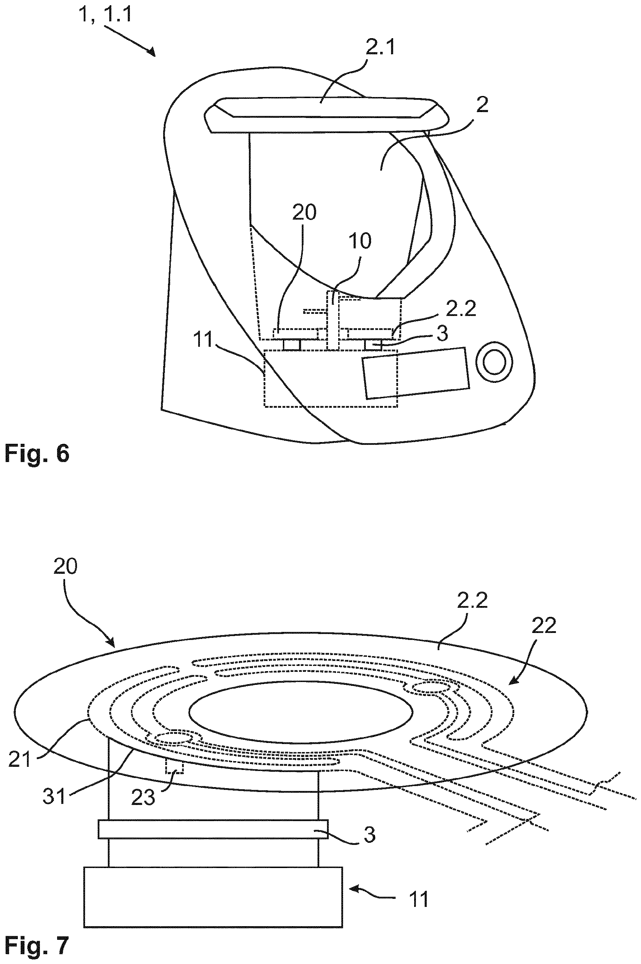

Figur 6 zeigt ferner ein Haushaltsgerät 1 in Form eines Küchengerätes 1.1 mit einer bewegbaren ersten Funktionseinheit 10 zum Bereitstellen einer ersten Gerätefunktion für einen Benutzer. Die erste Funktionseinheit 10 umfasst dabei ein Rührwerk, insbesondere in Form eines rotierbaren Messers, sodass im Rahmen der ersten Gerätefunktion Zutaten in dem Küchengerät 1.1 zerkleinert und/oder durchmischt werden können. Ferner weist die Küchenmaschine 1.1 eine elektrische zweite Funktionseinheit 20 zum Bereitstellen einer zweiten Gerätefunktion für den Benutzer auf. Dazu umfasst die zweite Funktionseinheit 20 eine elektrische Widerstandsheizung 21, wie in Figur 7 dargestellt. Die erste und zweite Funktionseinheit 10, 20 sind in einem Kochgefäß 2 der Küchenmaschine 1.1 angeordnet, sodass Zutaten, die in das Kochgefäß 2 hineingegeben werden, durch die erste Funktionseinheit 10 und die zweite Funktionseinheit 20 bearbeitet werden können. Insbesondere kann die erste Funktionseinheit 10 und/oder die Antriebsvorrichtung 11 durch einen Boden 2.2 des Kochgefäßes 2 hindurchgeführt sein. Vorzugsweise kann die zweite Funktionseinheit 20 am Boden 2.2 des Kochgefäßes 2 angeordnet sein. Um die erste Funktionseinheit 10 zu betreiben weist die Küchenmaschine 1.1 ferner eine Antriebsvorrichtung 11 mit einem Elektromotor 12 auf, die gemäß dem ersten Ausführungsbeispiel ausgebildet sein kann. Dabei weist die Antriebsvorrichtung 11 eine Vorschaltung 30 mit einem Strombegrenzungselement 31 zum Begrenzen eines Stroms 200 auf, wobei das Strombegrenzungselement 31 durch die zweite Funktionseinheit 20 gebildet ist. Die Widerstandsheizung 21 weist zumindest ein Widerstandselement 22 auf, welches durch Bestromung zu einer Erwärmung der Widerstandsheizung 21 führen und dadurch die Zutaten im Kochgefäß 2 erwärmen kann. Das Widerstandselement 21 ist ferner mit der Antriebsvorrichtung 11 durch elektrische Kontaktierung 3, insbesondere in Form einer Steckverbindung, verbunden und elektrisch in die Vorschaltung 30 eingebunden. Dadurch bildet das Widerstandselement 22 zumindest bereichsweise das Strombegrenzungselement 31. Insbesondere können mehrere, miteinander verschaltete Widerstandselemente 22 bereichsweise oder vollständig das Strombegrenzungselement 31 bilden. Durch die elektrische Kontaktierung 3, insbesondere die Steckverbindung, kann das Kochgefäß 2 mit der ersten und zweiten Funktionseinheit 10, 20 von der Antriebsvorrichtung 11 lösbar sein und somit z. B. zum Ausgießen der Zutaten und/oder zum Reinigen unabhängig von der Antriebsvorrichtung 11 verwendet werden. Vorzugsweise erfolgt ein Umschalten 103 in den Sicherheitszustand III der Antriebsvorrichtung 11 automatisch, wenn ein Deckel 2.1 des Kochgefäßes 2 geöffnet wird, sodass das Rührwerk der ersten Funktionseinheit 10 nicht unbeabsichtigt auslöst. Vorzugsweise kann die Widerstandsheizung 21 ferner einen Messsensor 23 zum Messen eines Stromparameters aufweisen. Der Messsensor 23 kann dabei derart am Widerstandselement 21 angeordnet sein, dass durch den Messsensor 23 ein Strom 200 der Vorschaltung 30 am Strombegrenzungselement 31 und/oder eine Bestromung im Betrieb der Widerstandsheizung 21 messbar ist. Durch eine Messung des Stroms 200 der Vorschaltung 30 kann z. B. eine maximale Kapazität einer Kapazität 15 der Antriebsvorrichtung 11 ermittelt werden, und damit insbesondere deren Funktionsfähigkeit überprüft werden. Insbesondere kann somit auf einen ohnehin an der Widerstandsheizung 21 vorhandenen Sensor zurückgegriffen werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Haushaltsgerät
- 1.1: Küchengerät
- 2: Kochgefäß
- 2.1: Deckel
- 2.2: Boden von 2
- 3: elektrische Kontaktierung

- 10: erste Funktionseinheit
- 11: Antriebsvorrichtung
- 12: Elektromotor
- 13: Anschluss
- 14: Motorsteuereinheit
- 15: Kapazität

- 20: zweite Funktionseinheit
- 21: Widerstandsheizung
- 22: Widerstandselement
- 23: Messsensor

- 30: Vorschaltung
- 31: Strombegrenzungselement
- 32: Umschalteinheit
- 33: erstes Schaltelement
- 34: zweites Schaltelement
- 35: drittes Schaltelement

- 100: Verfahren
- 101: Betreiben von 30 in I
- 102: Umschalten von 30 in II

- 200: Ladestrom
- 200.1: Stromparameter
- 201: Stromspitze

- I: Schutzschaltzustand
- II: Betriebsschaltzustand

## Patentansprüche

1. Haushaltsgerät (1) aufweisend
eine bewegbare erste Funktionseinheit (10) zum Bereitstellen einer ersten Gerätefunktion für einen Benutzer,
eine elektrische zweite Funktionseinheit (20) zum Bereitstellen einer zweiten Gerätefunktion für den Benutzer,
und eine Antriebsvorrichtung (11) zum Antreiben der ersten Funktionseinheit (10) mit einem Elektromotor (12), einem Anschluss (13) zur Energieversorgung des Elektromotors (12) und einer Vorschaltung (30), die zwischen den Anschluss (13) und den Elektromotor (12) geschaltet ist,
wobei die Vorschaltung (30) ein Strombegrenzungselement (31) zum Begrenzen eines Stroms (200) aufweist,
**dadurch gekennzeichnet,**
**dass** das Strombegrenzungselement (31) durch die zweite Funktionseinheit (20) gebildet ist.

2. Haushaltsgerät (1) nach Anspruch 1,
**dadurch gekennzeichnet,**
**dass** die Antriebsvorrichtung (11) eine über den Anschluss (13) aufladbare Kapazität (15) umfasst, wobei das Strombegrenzungselement (31) zum Begrenzen eines Stroms (200) beim Aufladen der Kapazität (15) ausgebildet ist, insbesondere wobei es sich bei der Kapazität (15) um zumindest einen Zwischenkreiskondensator handelt.

3. Haushaltsgerät (1) nach einem der Ansprüche 1 oder 2,
**dadurch gekennzeichnet,**
**dass** die zweite Funktionseinheit (20) eine elektrische Widerstandsheizung (21) umfasst, wobei das Strombegrenzungselement (31) durch zumindest einen Bereich eines Widerstandselements (22) zum Erwärmen der Widerstandsheizung (21) gebildet ist.

4. Haushaltsgerät (1) nach einem der vorhergehenden Ansprüche,
**dadurch gekennzeichnet,**
**dass** die Vorschaltung (30) eine Umschalteinheit (32) umfasst, durch welche die Vorschaltung (30) zumindest zwischen einem Schutzschaltzustand (I), in welchem ein Strom (200) durch das Strombegrenzungselement (31) begrenzbar ist, und einem Betriebsschaltzustand (II), in welchem das Strombegrenzungselement (31) deaktiviert ist, umschaltbar ist.

5. Haushaltsgerät (1) nach einem der vorhergehenden Ansprüche,
**dadurch gekennzeichnet,**
**dass** die Umschalteinheit (32) zum Umschalten zwischen dem Schutzschaltzustand (I) und dem Betriebsschaltzustand (II) zumindest ein erstes Schaltelement (33), welches zum Strombegrenzungselement (31) parallel geschaltet ist, und ein zweites Schaltelement (34), welches zum Strombegrenzungselement (31) in Reihe geschaltet ist, umfasst.

6. Haushaltsgerät (1) nach einem der vorhergehenden Ansprüche,
**dadurch gekennzeichnet,**
**dass** die Umschalteinheit (32) zum Umschalten zwischen dem Schutzschaltzustand (I) und dem Betriebsschaltzustand (II) zumindest ein Relais und/oder zumindest einen Transistor, insbesondere in Form eines MOSFETs, aufweist.

7. Haushaltsgerät (1) nach einem der vorhergehenden Ansprüche,
**dadurch gekennzeichnet,**
**dass** zwischen die Vorschaltung (30) und den Elektromotor (12) eine Motorsteuereinheit (14) zum Ansteuern des Elektromotors (12) geschaltet ist, insbesondere wobei es sich bei dem Elektromotor (12) um einen umrichterbetriebenen Motor handelt.

8. Haushaltsgerät (1) nach einem der vorhergehenden Ansprüche,
**dadurch gekennzeichnet,**
**dass** es sich bei dem Haushaltsgerät (1) um ein Küchengerät (1.1) zum Zubereiten von Speisen handelt, insbesondere wobei die erste Funktionseinheit (10) ein Rührwerk aufweist und/oder wobei die zweite Funktionseinheit (20) in einem von der Antriebsvorrichtung (11) lösbaren Kochgefäß (2) angeordnet ist.

9. Haushaltsgerät (1) nach einem der vorhergehenden Ansprüche,
**dadurch gekennzeichnet,**
**dass** die zweite Funktionseinheit (20) mit der Antriebsvorrichtung (11), insbesondere mit der Vorschaltung (30), durch eine elektrische Kontaktierung (3), vorzugsweise in Form einer Steckverbindung, verbunden ist, wodurch die zweite Funktionseinheit (20) von der Antriebsvorrichtung (11) lösbar ist.

10. Verfahren (100) zum Betreiben eines Haushaltsgerätes (1), insbesondere nach einem der vorhergehenden Ansprüche, mit einer bewegbaren ersten Funktionseinheit (10) zum Bereitstellen einer ersten Gerätefunktion für einen Benutzer umfassend zumindest folgenden Schritt:
- Betreiben (101) einer Antriebsvorrichtung (11) zum Antreiben der ersten Funktionseinheit (10) des Haushaltsgerätes (1) durch einen elektrischen Strom (200), wobei ein Begrenzen des Stroms (200) durch eine zweite Funktionseinheit (20) zum Bereitstellen einer zweiten Gerätefunktion für den Benutzer des Haushaltsgerätes (1), insbesondere beim Einschalten oder Anlaufen der Antriebsvorrichtung (11), erfolgt.

11. Verfahren (100) nach Anspruch 10,
**dadurch gekennzeichnet,**
**dass** zumindest beim Betreiben (101) der Antriebsvorrichtung (11) eine Kapazität (15) des Haushaltsgerätes (1) geladen wird, wobei beim Begrenzen des Stroms (200) ein Ladestrom der Kapazität (15) begrenzt wird.

12. Verfahren (100) nach einem der Ansprüche 10 oder 11,
**dadurch gekennzeichnet,**
**dass** das Begrenzen des Stroms (200) in einem Schutzschaltzustand (I) der Antriebsvorrichtung (11) erfolgt, und das Verfahren (100) zumindest einen der folgenden Schritte umfasst:
- Umschalten (102) in einen Betriebsschaltzustand (II), insbesondere nach dem Einschalten oder Anlaufen, der Antriebsvorrichtung (11), in welchem das Begrenzen des Stroms (200) durch die zweite Funktionseinheit (20) deaktiviert ist, und/oder
- Umschalten (103) in einen Sicherheitszustand (III) der Antriebsvorrichtung (11), in welchem ein Elektromotor (12) der Antriebsvorrichtung (11) von einem Anschluss (13) der Antriebsvorrichtung (11) elektrisch getrennt ist.

13. Verfahren (100) nach Anspruch 12,
**dadurch gekennzeichnet,**
**dass** beim Umschalten (102) in den Betriebsschaltzustand (II) die zweite Funktionseinheit (20) zumindest teilweise überbrückt und/oder vom Anschluss (13) und/oder vom Elektromotor (12) elektrisch getrennt wird.

14. Verfahren (100) nach einem der Ansprüche 12 oder 13,
**dadurch gekennzeichnet,**
**dass** beim Umschalten (102) in den Betriebsschaltzustand (II) folgende Schritte ausgeführt werden:
- Schließen (102.1) eines ersten Schaltelementes (33) einer Umschalteinheit (32) der Antriebsvorrichtung (11), welches zur zweiten Funktionseinheit (20) zumindest teilweise parallel geschaltet ist,
- Öffnen (102.2) eines zweiten Schaltelementes (34) der Umschalteinheit (32), welches zur zweiten Funktionseinheit (20) zumindest teilweise in Reihe geschaltet ist.

15. Verfahren (100) nach einem der Ansprüche 10 bis 14,
**dadurch gekennzeichnet,**
**dass** die zweite Funktionseinheit (20) eine elektrische Widerstandsheizung (21) aufweist, die beim Begrenzen des Stroms (200) zumindest bereichsweise bestromt wird.
